(19) **Europäisches Patentamt / European Patent Office / Office européen des brevets**

(11) **EP 3 520 384 B1**

(12) **FASCICULE DE BREVET EUROPEEN**

(45) Date de publication et mention
de la délivrance du brevet:
**31.08.2022 Bulletin 2022/35**

(21) Numéro de dépôt: **17787479.9**

(22) Date de dépôt: **27.09.2017**

(51) Classification Internationale des Brevets (IPC):
***H04N 1/60*** *(2006.01)*

(52) Classification Coopérative des Brevets (CPC):
**H04N 1/6033**

(86) Numéro de dépôt international:
**PCT/FR2017/052614**

(87) Numéro de publication internationale:
**WO 2018/060609 (05.04.2018 Gazette 2018/14)**

(54) **ESTIMATION DU SPECTRE EN RÉFLEXION OU EN TRANSMISSION D'UN ÉLÉMENT DE SURFACE**

SCHÄTZUNG DES REFLEXIONSSPEKTRUMS ODER ÜBERTRAGUNGSSPEKTRUMS EINES OBERFLÄCHENELEMENTS

ESTIMATION OF THE REFLECTION SPECTRUM OR TRANSMISSION SPECTRUM OF A SURFACE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2016 FR 1659127**

(43) Date de publication de la demande:
**07.08.2019 Bulletin 2019/32**

(73) Titulaire: **Alwan Color Expertise**
**69110 Sainte-Foy-Les-Lyon (FR)**

(72) Inventeurs:
 • **TRINH, Eric**
 **69300 Caluire (FR)**
 • **SLAVUJ, Radovan**
 **69005 Lyon (FR)**

(74) Mandataire: **Cabinet Beau de Loménie**
**158, rue de l'Université**
**75340 Paris Cedex 07 (FR)**

(56) Documents cités:
 **WO-A1-98/46008       WO-A1-2005/013188**
 **WO-A1-2005/043889    WO-A1-2011/026167**

 • **BALASUBRAMANIAN R: "OPTIMIZATION OF THE SPECTRAL NEUGEBAUER MODEL FOR PRINTER CHARACTERIZATION", JOURNAL OF ELECTRONIC IMAGING, SPIE / IS & T, 1000 20TH ST. BELLINGHAM WA 98225-6705 USA, vol. 8, no. 2, 1 avril 1999 (1999-04-01), pages 156-166, XP000825806, ISSN: 1017-9909, DOI: 10.1117/1.482694**

**Description**

Arrière-plan de l'invention

Pour reproduire une couleur souhaitée avec un dispositif de reproduction de la couleur (écran, imprimante, presse, dispositif d'impression quelconque, etc.), il est nécessaire que ce dispositif ait été préalablement caractérisé.

En effet, bien que les proportions de colorants à apposer sur une surface par un dispositif de reproduction de la couleur (ci-après dispositif de reproduction couleur) soient prédéterminées, la couleur obtenue et perçue visuellement peut varier en fonction de la structure de cette surface, des colorants utilisés et du dispositif.

On appelle « teinte » les valeurs des proportions des différents colorants utilisés pour reproduire une couleur spécifique.

Usuellement, pour caractériser un dispositif de reproduction de la couleur, l'utilisateur reproduit sur le dispositif une charte comportant une certaine quantité de motifs définis par leurs teintes.

La mesure colorimétrique et/ou spectrale de ces motifs permet alors de créer un modèle du comportement de la reproduction colorimétrique du dispositif de reproduction couleur.

A partir de ce modèle, le dispositif de reproduction couleur va pouvoir appliquer la teinte adéquate pour obtenir la couleur souhaitée en sortie.

Pour mesurer la fidélité d'une prédiction, on utilise la valeur ΔE, qui représente une mesure de la distance entre la valeur colorimétrique prédite du motif et sa valeur réelle mesurée.

Actuellement, pour déterminer le modèle colorimétrique d'un dispositif de reproduction couleur, il existe deux familles d'approche :

La première approche est une approche « mathématique ».

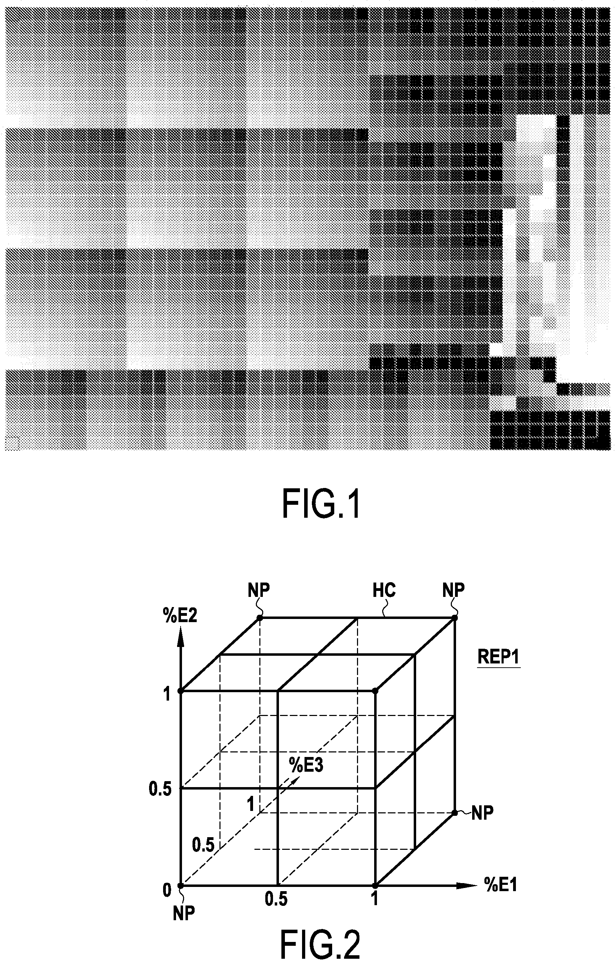

Cette approche nécessite une quantité élevée de motifs (usuellement plus de 1500 motifs pour obtenir un ΔE moyen < 1 pour un dispositif d'impression utilisant quatre encres de couleur cyan, magenta, jaune et noir), par exemple compris sur une charte telle que celle représentée à la **figure 1.**

Dans un contexte industriel, selon le procédé mis en œuvre, cette grande quantité de motifs peut avoir pour conséquence l'arrêt ou un ralentissement important de la production d'un produit, le temps par exemple de procéder à l'impression de la charte.

Pour diminuer voire éliminer le ralentissement de la production, un nombre de motifs moins important peut être imprimé, cependant la conséquence immédiate de cette réduction de nombre de motifs est une perte de précision significative (ΔE moyen > 4, voire plus, s'il y a moins de 100 motifs pour un dispositif d'impression utilisant quatre encres de couleurs cyan, magenta, jaune et noir).

La deuxième approche est une approche physique.

Cette approche repose sur une modélisation de phénomènes physiques, et notamment de l'interaction entre une source de lumière, un ou plusieurs colorants et une surface de texture connue.

Les différents modèles physiques connus et qui requièrent un faible nombre de motifs permettent de prédire le comportement du dispositif de reproduction couleur avec toutefois une précision inférieure à l'approche mathématique, qui présente elle néanmoins l'inconvénient d'exiger un grand nombre de motifs. Ainsi, avec très peu de points de contrôle, l'approche physique est capable de prédire assez fidèlement le modèle (ΔE moyen < 2 pour moins de 40 motifs pour un dispositif d'impression utilisant quatre encres de couleurs cyan, magenta, jaune et noir).

Il existe également une approche hybride inspirée à la fois de l'approche mathématique et de l'approche physique.

Cette approche, appelée « Cellular Yule-Nielsen », et décrite dans le document « R. Balasubramanian « Optimisation of the spectral Neugebauer model for printer characterization », J. Electronic Imagine, 8, (2), 156-166 (1999) » a été proposée en reprenant le principe de l'approche physique de Yule-Nielsen (décrite dans le document « J.A.C. Yule, W.J. Nielsen, « The penetration of light into paper and its effect on halftone reproduction », Proc. TAGA 3, 65-76 (1951) ») mais en subdivisant régulièrement l'espace des teintes de manière à pouvoir déterminer des sous-modèles dans chacune des différentes subdivisions. Cette approche est également décrite dans le document WO 98/46008.

Ce partitionnement de l'espace des teintes est représenté à la **figure 2.**

Une seule subdivision permet de diviser par deux l'écart colorimétrique ΔE, mais créer cette subdivision nécessite par exemple la mesure de 65 motifs supplémentaires pour un dispositif d'impression utilisant quatre encres de couleurs cyan, magenta, jaune et noir.

Pour automatiser la caractérisation de dispositifs de reproduction couleur, il est indispensable de réduire le nombre de motifs à reproduire, l'idéal étant par exemple de ne pas dépasser 40 motifs pour un dispositif d'impression. Ce nombre correspond au nombre optimal de motifs imprimables hors des parties vendables d'une feuille ou d'un substrat. En effet, il est d'usage d'imprimer sur chaque feuille ou substrat une barre de contrôle permettant le contrôle de la stabilité du dispositif d'impression.

En déterminant un modèle suffisamment précis du dispositif d'impression à partir d'au plus 40 motifs, il serait possible de donner un double usage à cette barre de contrôle : le contrôle de la stabilité et la caractérisation.

Ces deux étapes pourraient alors se faire sans interrompre ou ralentir la production.

L'invention vise un procédé et un dispositif permettant d'effectuer une telle modélisation.

Objet et résumé de l'invention

Ainsi et selon un premier aspect, l'invention vise un procédé de prédiction d'un spectre en réflexion ou en transmission d'un élément d'une première surface, cet élément ayant été coloré par un dispositif de reproduction de la couleur à partir d'un mélange de plusieurs colorants en proportions prédéterminées, ces proportions définissant une teinte de reproduction de la couleur de l'élément, tel que défini dans la revendication 1.

Les spectres en réflexion et en transmission d'une surface, encore appelés courbes de réflectance et de transmittance, correspondent respectivement aux proportions de lumière réfléchie et transmise par cette surface en fonction de la longueur d'onde.

La texture d'une surface correspond à l'arrangement et aux caractéristiques (grosseur, forme, etc.) des particules de cette surface.

Au sens de l'invention, un élément ou un motif d'une surface correspond préférablement à une partie de la surface, mais peut également correspondre à l'intégralité de cette surface.

Un élément est dit coloré en ce qu'il présente une couleur unie.

Une teinte propre à un dispositif de reproduction de la couleur correspond aux proportions de colorants utilisés par ce dispositif pour colorer une parcelle prédéterminée d'une surface. Cette parcelle peut correspondre au plus petit élément de surface coloriable par le dispositif de reproduction de la couleur. Elle peut également correspondre à un élément d'une surface ou à un motif d'une surface au sens de l'invention.

Un élément peut être reproduit sur une surface par le dispositif de reproduction de la couleur, ou bien peut être simulé comme étant reproduit sur cette surface. Dans le second cas, on peut estimer les caractéristiques photométriques de cet élément comme s'il avait été reproduits avec une teinte connue sur une surface de texture connue, même s'il n'a pas nécessairement été reproduit.

On peut en outre estimer le spectre de cet élément de surface par une analyse physique de l'interaction entre une source de lumière et cet élément.

Ces estimations peuvent être effectuées en considérant différents modèles physiques qui seront évoqués par la suite.

Un dispositif de reproduction couleur peut correspondre à une imprimante, un écran, une presse, etc.

Ce dispositif de reproduction couleur comporte un système de stockage de plusieurs colorants correspondant à des couleurs primaires, le nombre de ces colorants étant en général compris entre trois et sept. Le dispositif de reproduction couleur contrôle les quantités de colorants à apposer sur une surface.

Le système de stockage peut par exemple correspondre à un ensemble de cartouches, chaque cartouche stockant un colorant correspondant à une couleur primaire.

Au sens de l'inventon, les quantités des différents colorants apposes par le dispositif de reproduction de la couleur sur une parcelle de surface sont déterminées à partir de proportions prédéterminées de chacun de ces colorants et d'une quantité de référence.

Par exemple, pour un dispositif d'impression, la quantité de référence peut être de 10 picolitres, et si la proportion prédéterminée d'une certaine encre est de 40%, alors le dispositif d'impression apposera une quantité de cette encre égale à 4 picolitres sur cette parcelle.

On peut également dire en d'autres termes que chaque colorant apposé sur une parcelle de la surface est caractérisée par un pourcentage de couverture de colorant.

Ces proportions peuvent être prédéterminées par un utilisateur du dispositif de reproduction de la couleur.

L'ensemble de motifs de référence reproduits par le dispositif de reproduction couleur peut être utilisé pour caractériser ce dispositif, ou en d'autres termes vérifier que ce dispositif reproduise bien la couleur souhaitée, et dans le cas contraire corriger les proportions de colorants à utiliser pour obtenir la bonne couleur.

La détermination d'un spectre dit « adapté » d'un motif en fonction du spectre connu de ce motif revient à modifier les composantes spectrales du spectre connu.

Il sera vu par la suite qu'au sens de l'invention, les composantes spectrales du spectre connu du motif sont modifiées de manière à approcher le spectre recherché de l'élément.

Par exemple, les composantes spectrales comprises dans le spectre du motif mais non comprises dans le spectre de l'élément peuvent être supprimées du spectre du motif pour obtenir le spectre adapté de ce motif.

De manière analogue, les composantes spectrales non comprises dans le spectre du motif mais comprises dans le spectre de l'élément peuvent être ajoutées au spectre du motif pour obtenir le spectre adapté de ce motif.

De manière générale, la détermination du spectre adapté revient à interpoler le spectre du motif pour qu'il soit le plus proche possible du spectre recherché de l'élément.

Le moyennage pondéré des spectres adaptés, en d'autre terme le calcul de la moyenne pondérée de ces spectres, correspond à une moyenne de ces spectres, affectés de coefficients.

De manière générale, ce procédé permet avantageusement d'estimer de manière précise le spectre d'un élément d'une surface, à partir d'un nombre réduit de motifs (typiquement ΔE < 2 pour 36 motifs).

Dans un mode particulier de réalisation:

- un premier repère en N dimensions est considéré, avec N le nombre des colorants, les points du premier repère permettant de décrire des teintes de reproduction de la couleur, chaque dimension du premier repère correspondant à une proportion d'un des colorants ;
- l'ensemble de motifs de référence comporte $2^N$ motifs dits « primaires », les points décrivant les teintes de ces motifs primaires dans le premier repère étant localisés aux sommets d'un hypercube, cet hypercube délimitant un ensemble des teintes réalisables par le dispositif de reproduction de la couleur ; et
- la détermination du spectre adapté d'un motif du sous-ensemble est effectuée en fonction des spectres des motifs primaires.

Les coordonnées d'un point de ce premier repère correspondent aux proportions des colorants utilisés pour définir une teinte associée à ce point.

De manière connue, l'hypercube délimitant l'ensemble des teintes qu'il est possible d'obtenir avec le dispositif de reproduction de la couleur s'étend sur chacun des axes du repère de 0% à 100% de proportion d'un colorant.

Les motifs primaires sont représentés dans le repère par les sommets de cet hypercube, encore appelés en anglais « Neugebauer Primaries », et qui sont tels que décrit dans le document « H.E.J. Neigebauer ; « Die theoritischen Grundlagen des Mehrfarbendrucks », Zeitschrift fuer wissenschaftliche Photographie 36, 36-73 (1937) » et le document « J.A.C. Yule, W.J. Nielsen, « The penetration of light into paper and its effect on halftone reproduction », Proc. TAGA 3, 65-76 (1951) ».

Ces sommets ont donc des coordonnées dans ce premier repère égales à 0% ou 100%.

Dans un mode particulier de réalisation, le spectre adapté d'un motif du sous-ensemble est déterminé par la formule suivante :

$$R^{\frac{1}{n}}_{adapté}(\lambda) = R^{\frac{1}{n}}_{mesuré}(\lambda) + \sum_{i \in ENP}\left[a_{i_{recherché}} - a_{i_{mesuré}}\right] * R_i^{1/n}(\lambda)$$

Dans lequel :

$R_{adapté}(\lambda)$ correspond au spectre adapté du motif à une longueur d'onde $\lambda$ ;
$R_{mesuré}(\lambda)$ correspond au spectre connu du motif à une longueur d'onde $\lambda$ ;
Les $a_{i_{recherché}}$ pour $i \in ENP$ correspondent à des coefficients dit « de Demichel » associés à la teinte de l'élément ;
Les $a_{i_{mesuré}}$ pour $i \in ENP$ correspondent aux coefficients de Demichel associés à la teinte connue du motif;
Les $R_i(\lambda)$ pour $i \in NP$ correspondent aux spectres des motifs primaires ;

$ENP$ = {1; 2; 3; ... ; $2^N$} avec N le nombre des colorants ; et $n \in \mathbb{R}^+$.

Les coefficients de Demichel sont tels que définis dans le document « M.E Demichel, Procédés 26 (3), 17-21 (1924) ».

Ces coefficients correspondent aux différences de proportion de colorant dans le premier repère entre le point représentant la teinte de l'élément et les sommets ou « Neugebauer primaries ».

Dans un mode particulier de réalisation, le spectre adapté d'un motif du sous-ensemble est déterminé par la formule suivante :

$$R_{adapté}(\lambda) = R_{mesuré}(\lambda) * \prod_{i \in NP} R_i^{\left(a_{i_{recherché}} - a_{i_{mesuré}}\right)}(\lambda)$$

Dans lequel :

$R_{adapté}(\lambda)$ correspond au spectre adapté du motif à une longueur d'onde $\lambda$ ;

$R_{mesuré}(\lambda)$ correspond au spectre connu du motif à une longueur d'onde $\lambda$ ;

Les $a_{i_{recherché}}$ pour $i \in ENP$ correspondent à des coefficients dit « de Demichel » associés à la teinte de l'élément ;

Les $a_{i_{mesuré}}$ pour $i \in ENP$ correspondent aux coefficients de Demichel associés à la teinte connue du motif;

Les $R_i(\lambda)$ pour $i \in NP$ correspondent aux spectres des motifs primaires ;

$ENP = \{1; 2; 3; ... ; 2^N\}$ avec N le nombre des colorants ; et $n \in \mathbb{R}^+$.

La valeur n'est usuellement obtenue par une recherche itérative de sa valeur optimale.

Dans un mode particulier de réalisation, le spectre adapté d'un motif du sous-ensemble est déterminé par une méthode cherchant à minimiser la différence des réflectances ou des transmittances entre le spectre en réflexion ou en transmission du motif et le spectre en réflexion ou en transmission de l'élément.

Dans un mode particulier de réalisation, l'étape de sélection du sous-ensemble de motifs comporte :

- une étape de représentation, dans un deuxième repère à N dimensions, avec N le nombre de colorants du dispositif de reproduction de la couleur, de points décrivant les teintes des motifs de référence de l'ensemble, chaque dimension de ce deuxième repère correspondant à une proportion d'un des colorants ;
- une étape de sélection des motifs du sous-ensemble parmi les motifs de référence de l'ensemble, les points décrivant les teintes des motifs sélectionnés correspondant aux plus proches voisins d'un point décrivant la teinte de l'élément dans le premier espace.

Dans un mode particulier de réalisation, l'étape de sélection du sous-ensemble de motifs comporte :

- une étape de maillage d'un troisième repère à N dimensions, avec N le nombre de colorants du dispositif de reproduction de la couleur, le maillage étant constitué par des points décrivant les teintes des motifs de référence de l'ensemble, chaque dimension de ce troisième repère correspondant à une proportion d'un des colorants ;
- une étape de sélection des motifs du sous-ensemble parmi les motifs de référence, les points décrivant les teintes des motifs sélectionnés correspondant aux sommets d'un simplexe du maillage, ce simplexe contenant le point décrivant la teinte de l'élément dans le deuxième espace.

Un point décrivant une teinte d'un motif ou une teinte de l'élément est donc un point dont les coordonnées sont égales aux proportions des différents colorants utilisés pour reproduire ce motif ou cet élément.

Un simplexe correspond à une généralisation du triangle à une dimension quelconque.

Dans un repère en N dimensions, un simplexe comporte donc N+1 sommets.

Dans ce mode de réalisation, les coefficients affectés lors du moyennage et permettant d'estimer le spectre de l'élément sont déterminés par une approche barycentrique, en considérant la teinte de l'élément comme un barycentre des N+1 sommets.

Dans un mode particulier de réalisation, lors de l'étape de sélection du sous-ensemble de motifs, l'intégralité des motifs de l'ensemble sont sélectionnés.

Dans un mode particulier de réalisation, le procédé comporte une étape préalable de mesure de spectres en réflexion ou en transmission de motifs compris dans un assortiment de motifs de teintes connues reproduites sur la deuxième surface, une partie de cet assortiment étant compris dans l'ensemble de motifs de référence.

Ces spectres peuvent par exemple être mesurés au moyen d'un spectromètre.

Dans un mode particulier de réalisation, le procédé comporte une étape préalable de filtrage de l'assortiment de motifs, ce filtrage permettant :

- d'obtenir des motifs compris dans l'ensemble de motifs de référence; et
- de déterminer les spectres de ces motifs obtenus à partir des spectres mesurés des motifs de l'assortiment.

Ce filtrage peut par exemple correspondre à une suppression d'un motif de l'assortiment de motif pour obtenir les motifs compris dans l'ensemble de motifs de référence.

Il peut également s'agir d'un moyennage ou d'une correction de plusieurs spectres mesurés afin d'obtenir les spectres des motifs de référence.

Dans un mode particulier de réalisation, le procédé comporte une étape préalable d'estimation des spectres en réflexion ou en transmission de motifs simulés comme étant reproduits sur la deuxième surface avec une teinte connue, ces motifs simulés faisant parti du sous-ensemble et leurs spectres estimés étant nécessaire à la détermination du spectre de l'élément.

En effet, il est possible que dans certains cas les spectres de certains motifs soient nécessaires pour réaliser le procédé et estimer le spectre de l'élément, mais que ces motifs n'aient pas été reproduits et/ou qu'on ne connaisse pas leurs spectres.

Dans ce cas, il est possible d'extrapoler ces spectres, par exemple à l'aide de modèle physique comme des modèles de type « Kubelka-Munk » ou « Clapper-Yule ». Ces modèles sont respectivement décrits dans les documents « F.R. Clapper and J.A.C, Yule, « The Effect of Multiple Internal Reflections on the Densities of Halftone Prints on Paper », J. Opt. Soc. Am. 43, 600-603 (1953) » et « -Kubelka, P. and Munk, F., Z tech Physik, 12, 593 (1931) ».

Selon un deuxième aspect, l'invention vise un dispositif d'estimation d'un spectre en réflexion ou en transmission d'un élément d'une première surface, cet élément ayant été coloré par un dispositif de reproduction de la couleur à partir d'un mélange de plusieurs colorants en proportions prédéterminées, ces proportions définissant une teinte de reproduction de la couleur de l'élément, le que défini dans la revendication 11.

Dans un mode particulier de réalisation, les différentes étapes du procédé d'estimation d'un spectre en réflexion ou en transmission d'un élément d'une première surface sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en œuvre du procédé d'estimation d'un spectre en réflexion ou en transmission d'un élément d'une première surface telle que mentionnée ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou système capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Description détaillée

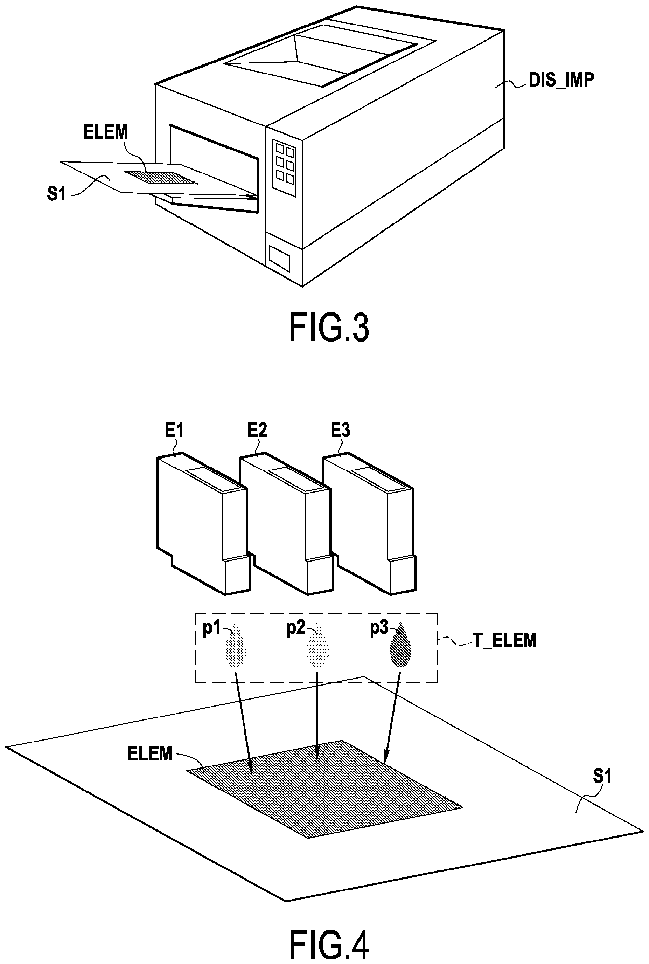

La **figure 3** représente un dispositif de reproduction de la couleur DIS_IMP.

Ce dispositif DIS_IMP peut consister en une imprimante, un écran, une presse, ou un quelconque autre dispositif de reproduction de la couleur permettant de reproduire une couleur sur une surface quelconque.

Au sens de l'invention, on cherche à estimer le spectre en réflexion ou en transmission R_ELEM d'un élément ELEM reproduits par le dispositif de reproduction de la couleur DIS_IMP sur une première surface S1.

Cette surface S1 peut présenter une texture quelconque, comme du papier, du carton, du plastique, etc.

Réaliser cette estimation peut par exemple permettre de caractériser le dispositif de reproduction de la couleur DIS_IMP, c'est-à-dire vérifier que ce dispositif de reproduction de la couleur DIS_IMP reproduise bien la couleur souhaitée par l'utilisateur, et dans le cas contraire corriger les proportions de colorants à utiliser pour obtenir la bonne couleur.

Par la suite, on ne considérera que l'estimation du spectre en réflexion, mais l'ensemble du procédé pourrait similairement être effectué pour un spectre en transmission.

Conformément à la **figure 4,** le dispositif de reproduction de la couleur DIS_IMP comporte par exemple trois cartouches comportant trois colorants E1, E2, et E3, et les applique sur la surface S1 dans des proportions respectives p1, p2, et p3, de manière à colorier l'élément ELEM.

Les proportions p1, p2 et p3 définissent la teinte T_ELEM de l'élément ELEM.

Le dispositif de reproduction de la couleur DIS_IMP peut comporter un autre dispositif de stockage des colorants, et peut également comporter un nombre différent de colorants.

On pourra considérer par la suite que le nombre N de colorants utilisés par le dispositif de reproduction de la couleur DIS_IMP est trois et que ces colorants correspondent aux trois couleurs primaires cyan, magenta et jaune pour un dispositif d'impression.

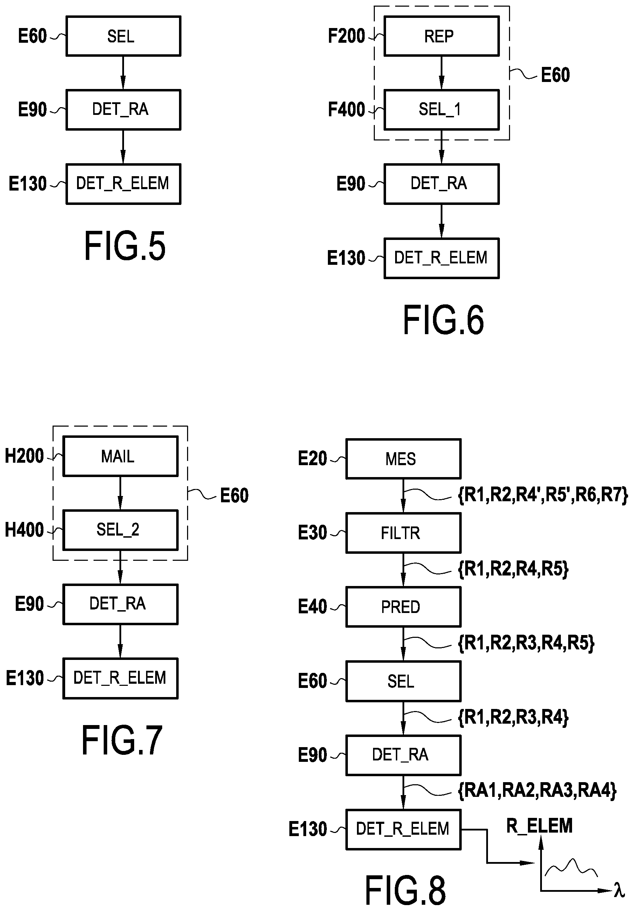

La **figure 5** illustre les étapes principales d'un procédé d'estimation d'un spectre en réflexion R_ELEM de l'élément ELEM reproduit sur la première surface S1 par le dispositif de reproduction de la couleur DIS_IMP, ce procédé étant conforme à l'invention.

Ce procédé comporte une première étape E60 de sélection d'un sous-ensemble de motifs M1, M2, M3, M4

parmi un ensemble de motifs de référence M1, M2, M3, M4, M5.

Ces motifs de référence M1, M2, M3, M4, M5 sont reproduits ou simulés comme étant reproduits sur une deuxième surface S2 présentant une texture identique à la première surface S1.

Par exemple, si la première surface S1 correspond à une feuille de papier, la deuxième surface S2 peut correspondre à une autre feuille du même papier.

Les motifs de référence qui font partie de cet ensemble de motifs M1, M2, M3, M4, M5 et qui ont été réellement reproduits sur la deuxième surface S2 forment par exemple une charte graphique, analogue à celle de la figure 1, ou une barre de contrôle du dispositif de reproduction de la couleur DIS_IMP.

Par ailleurs, le spectre R1, R2, R3, R4, R5 en réflexion et une teinte de reproduction de la couleur propre au dispositif DIS_IMP de chacun des motifs M1, M2, M3, M4, M5 de l'ensemble sont connus.

Par exemple, ces spectres en réflexion R1, R2, R3, R4, R5 peuvent avoir été mesurés par un spectrophotomètre, ou peuvent avoir été simulés par des modèles mathématiques ou physiques, comme les modèles de Kubelka-Munk ou Clapper-Yule.

Les teintes de reproduction de la couleur de ces motifs peuvent quant à elles être déterminées par un utilisateur.

Le sous-ensemble de motifs M1, M2, M3, M4 peut comprendre des motifs dont les spectres R1, R2, R3, R4 seront utiles à l'estimation du spectre R_ELEM de l'élément ELEM de la surface S1.

Des modes de réalisation de cette sélection de ces motifs parmi l'ensemble de motifs de référence seront décrits par la suite en référence aux figures 6 ou 7.

L'étape E60 est suivie d'une étape E90, dans laquelle pour chaque motif du sous-ensemble, un spectre adapté de ce motif est déterminé, au moins à partir du spectre en réflexion de ce motif.

La détermination du spectre adapté d'un motif revient à modifier les composantes spectrales du spectre connu (par exemple mesuré ou extrapolé) de ce motif. Plus précisément, les composantes spectrales du spectre connu du motif sont modifiées de manière à approcher le plus possible le spectre recherché de l'élément ELEM de la première surface S1.

Par exemple, si le spectre d'un des motifs sélectionnés M1, M2, M3, M4 possède une composante spectrale jaune alors qu'aucun colorant jaune n'a été utilisé pour colorier l'élément ELEM (i.e. la proportion de jaune de la teinte T_ELEM de l'élément ELEM est égale à 0%), cette composante pourra être supprimée ou fortement diminuée.

De la même manière, si la teinte T_ELEM de l'élément ELEM est caractérisée par une proportion relativement importante de magenta, par exemple 90%, mais que le spectre d'un des motifs sélectionnés M1, M2, M3, M4 ne possède pas de composante spectrale magenta ou en possède très peu, alors cette composante sera augmentée.

L'étape E90 est suivie d'une étape E130 d'estimation du spectre R_ELEM en réflexion de l'élément ELEM par moyennage pondéré des spectres adaptés RA1, RA2, RA3, RA4 des motifs du sous-ensemble M1, M2, M3, M4.

La **figure 6** et la **figure 7** illustrent deux modes de réalisation d'un procédé d'estimation d'un spectre en réflexion R_ELEM de l'élément ELEM dans lesquels l'étape de sélection du sous-ensemble de motifs M1, M2, M3, M4 parmi l'ensemble de motifs de référence M1, M2, M3, M4, M5 est détaillée, ce procédé étant conforme à l'invention.

Ces deux modes de réalisation reprennent les étapes principales E60, E90 et E130 décrites en référence à la figure 5.

Dans le premier mode de réalisation et en référence à la figure 6, l'étape E60 de sélection du sous-ensemble de motifs M1, M2, M3, M4 comporte une première sous-étape F200 de représentation, dans un deuxième repère REP2 à N dimensions (avec N le nombre de colorants E1, E2, E3 du dispositif de reproduction de la couleur DIS_IMP), de points P1, P2, P3, P4, P5 décrivant les teintes des motifs de référence M1, M2, M3, M4, M5.

Chaque dimension du deuxième repère REP2 correspond à une proportion %_E1, %_E2, %E3 d'un des colorants E1, E2, E3.

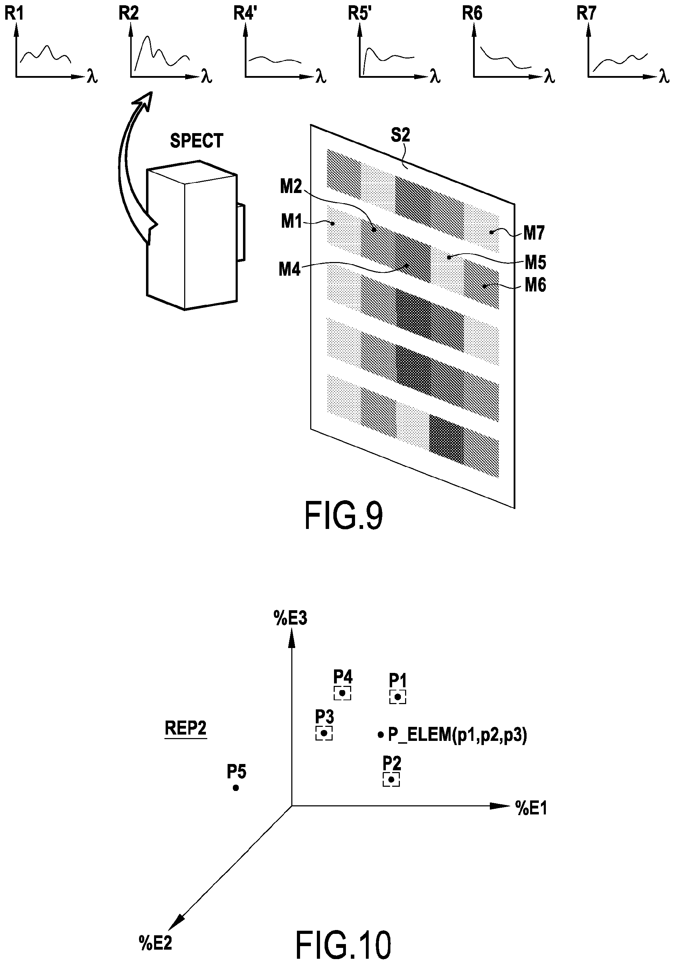

Ce deuxième repère REP2 peut être tel qu'illustré à la **figure 10.**

Dans cette figure, le nombre de dimensions N est égal à trois, correspondant aux trois colorants cyan, jaune et magenta.

En variante, ce nombre de dimensions N peut être différent, et les colorants utilisés également.

Dans la figure 10, les coordonnées de chaque point correspondent donc à des proportions de colorant cyan, de colorant jaune et de colorant magenta, ces proportions correspondant à une teinte.

Les différentes teintes des motifs de référence M1, M2, M3, M4, M5 de l'ensemble sont donc représentées dans ce deuxième repère REP2.

L'étape F200 est suivie d'une étape F400 de sélection des motifs du sous-ensemble M1, M2, M3, M4 parmi les motifs de référence de l'ensemble M1, M2, M3, M4, M5.

Cette sélection est réalisée telle que les points P1, P2, P3, P4 décrivant les teintes des motifs sélectionnés M1, M2, M3, M4 correspondent aux plus proches voisins d'un point P_ELEM décrivant la teinte de l'élément ELEM dans le deuxième repère REP2, tel que représenté à la figure 10.

Les coordonnées de ce point P_ELEM correspondent aux proportions prédéterminées p1, p2, p3 de colorants.

La méthode utilisée ici est appelée méthode des « k plus proches voisins », avec k le nombre de points qui seront sélectionnés.

Ce nombre de points k n'est pas nécessairement limité.

Dans le deuxième mode de réalisation et en référence à la figure 7, l'étape E60 de sélection du sous-ensemble de motifs M1, M2, M3, M4 comporte une première sous-étape H200 de maillage d'un troisième repère REP3 à N dimensions (avec N le nombre desdits plusieurs colorants E1, E2, E3).

Ce maillage est constitué par des points P1, P2, P3, P4, P5 décrivant les teintes des motifs de référence de l'ensemble M1, M2, M3, M4, M5.

Chaque dimension du troisième repère REP3 correspond à une proportion %_E1, %_E2, %E3 d'un des colorants E1, E2, E3.

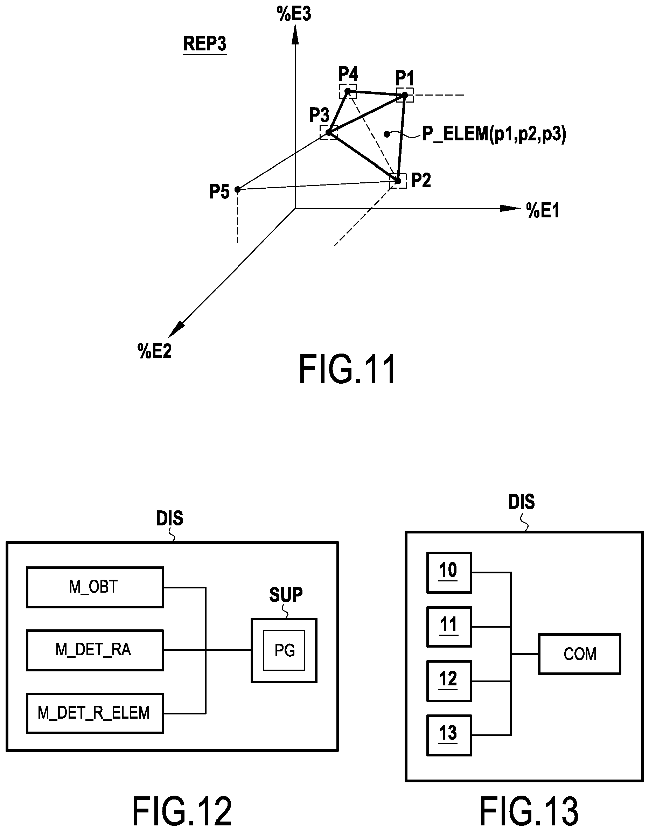

Ce repère REP3 peut être tel que représenté à la **figure 11.**

L'étape H200 est suivie d'une étape H400 de sélection des motifs du sous-ensemble M1, M2, M3, M4 parmi les motifs de référence de l'ensemble M1, M2, M3, M4, M5.

Dans ce deuxième mode de réalisation, les points décrivant les teintes des motifs sélectionnés M1, M2, M3, M4 correspondent aux sommets d'un simplexe du maillage, ce simplexe contenant le point P_ELEM décrivant la teinte T_ELEM de l'élément ELEM dans le troisième repère REP3.

Ce simplexe étant représenté dans un repère en N dimensions, il comporte N+1 sommets.

Dans la figure 11, le nombre de dimensions N étant égal à trois, le nombre de points sélectionnés pour faire partie du sous-ensemble est de quatre.

Dans un troisième mode de réalisation non représenté, tous les motifs de l'ensemble de motifs de référence M1, M2, M3, M4, M5 sont sélectionnée lors de l'étape E60.

La méthode utilisée pour sélectionner les motifs du sous-ensemble M1, M2, M3, M4 parmi les motifs de référence de l'ensemble M1, M2, M3, M4, M5 n'est pas limitée et pourrait être différente.

La **figure 8** illustre les étapes détaillées d'un procédé d'estimation d'un spectre R_ELEM en réflexion de l'élément ELEM conforme à l'invention.

Ce procédé reprend les étapes principales E60, E90 et E130 décrites en référence à la figure 5.

Dans ce mode de réalisation, le procédé peut comporter une étape préalable E20 de mesure des spectres R1, R2, R4', R5', R6, R7 en réflexion de motifs compris dans un assortiment de motifs M1, M2, M4, M5, M6, M7 de teinte connues reproduites sur la deuxième surface S2.

Une partie de l'assortiment M1, M2, M4, M5 est comprise dans l'ensemble de motifs de référence M1, M2, M3, M4, M5.

Les spectres R1, R2, R4', R5', R6, R7 des motifs de cet assortiment M1, M2, M4, M5, M6, M7 peuvent par exemple être mesurés à l'aide d'un spectrophotomètre SPECT, tel qu'illustré à la **figure 9.**

Certains de ces motifs seront utilisés dans le procédé d'estimation du spectre R_ELEM de l'élément ELEM, mais d'autres pourront être filtrés : ils pourront ne pas être utilisés ou leurs spectres pourront être modifiés.

En effet, l'étape E20 de mesure peut être suivie d'une étape E30 de filtrage de l'assortiment de motifs M1, M2, M4, M5, M6, M7, ce filtrage permettant :

- d'obtenir des motifs M1, M2, M4, M5 compris dans l'ensemble de motifs de référence M1, M2, M3, M4, M5 ; et
- de déterminer les spectres R1, R2, R4, R5 des motifs obtenus M1, M2, M4, M5 à partir des spectres mesurés R1, R2, R4', R5', R6, R7 des motifs de cet assortiment M1, M2, M4, M5, M6, M7.

Par exemple, certains motifs M6, M7 dont le spectre R6, R7 mesuré est jugé aberrant peuvent ne pas être utilisé dans le procédé et donc ne pas faire partie de l'ensemble des motifs de référence M1, M2, M3, M4, M5.

D'autre motifs de l'assortiment M4, M5 peuvent voir leurs spectres mesurée R4', R5' modifiés par moyennage ou correction, afin d'obtenir de nouveaux spectres R4, R5. Ces motifs M4, M5 feront partie de l'ensemble des motifs de référence, mais leurs spectres dits « connus » associés dans cet ensemble correspondent aux nouveaux spectres R4, R5.

D'autres motifs M1, M2 sont directement ajoutés à l'ensemble des motifs de référence M1, M2, M3, M4, M5, et leurs spectres connus correspondent directement à leurs spectres mesurés.

L'étape E30 de filtrage peut être suivie d'une étape E40 d'estimation de spectres R3 en réflexion de motifs M3 simulés comme étant reproduits sur la deuxième surface S2 avec une teinte connue.

Ces motifs simulés M3 font partis du sous-ensemble M1, M2, M3, M4 et leurs spectres estimés R3 sont nécessaires à la détermination du spectre R_ELEM de l'élément ELEM.

Cette étape E40 correspond à une étape de prédiction des spectres R3 de motifs M3, ces motifs étant indispensables pour l'estimation du spectre R_ELEM de l'élément ELEM.

Par exemple, ces motifs correspondent aux motifs dont la teinte est déterminée par une proportion d'un des N colorants égale à 100%, et des proportions des N-1 autres colorants égales à 0%.

De manière générale, au moins un motif est nécessaire par colorant utilisé.

La détermination des spectres de ces motifs simulés comme étant reproduits peut s'effectuer par extrapolation, par exemple en utilisant des modèles de type Kubelka-Munk ou Clapper-Yule.

L'étape d'estimation E40 peut être suivie d'une étape non représentée de détermination des paramètres (n, $a_{i_{recherché}}$ et $a_{i_{mesuré}}$), nécessaires à l'estimation du spectre R_ELEM de l'élément ELEM.

Ces paramètres seront détaillés ultérieurement.

Pour résumer le mode de réalisation illustré à la figure E20, les spectres R1, R2, R4', R5', R6, R7 de motifs M1, M2, M4, M5, M6, M7 sont d'abord mesurés.

Puis ces motifs mesurés M1, M2, M4, M5, M6, M7 sont filtrés pour obtenir des motifs M1, M2, M4, M5 compris dans l'ensemble de motifs de référence, associés à des spectres R1, R2, R4, R5 dit « connus ».

Les spectres R3 des motifs manquants M3 sont extrapolés et on obtient l'ensemble des motifs de référence M1, M2, M3, M4, M5.

Les motifs du sous-ensemble de motifs M1, M2, M3, M4 sont ensuite sélectionnés dans l'ensemble de motifs de référence, M1, M2, M3, M4, M5, puis leurs spectres sont adaptés pour obtenir les spectres adaptés RA1, RA2, RA3, RA4.

Enfin, le spectre R_ELEM de l'élément ELEM est estimé à partir de ces spectres adaptés RA1, RA2, RA3, RA4.

La détermination des spectres adaptés des motifs M1, M2, M3, M4 va à présent être détaillée.

On rappelle que de manière générale, la détermination du spectre adapté d'un motif revient à modifier les composantes spectrales du spectre connu de ce motif.

Plus précisément, les composantes spectrales du spectre connu de ce motif sont modifiées de manière à approcher le plus possible le spectre recherché de l'élément ELEM de la première surface S1.

Dans un mode particulier de réalisation, le spectre adapté RA1 d'un motif M1 du sous-ensemble M1, M2, M3, M4 est déterminé par une méthode cherchant à minimiser la différence des réflectances entre le spectre R1 en réflexion du motif M1 et le spectre R_ELEM en réflexion de l'élément ELEM.

Par exemple, cette minimisation est possible en utilisant une approche physique permettant d'estimer un spectre à partir d'une teinte.

Dans un mode particulier de réalisation, un premier repère REP1 en N dimensions est considéré (avec N le nombre desdits plusieurs colorants E1, E2, E3), les points du premier repère REP1 permettant de décrire des teintes de reproduction de la couleur.

Chaque dimension de ce premier repère REP1 correspond donc à une proportion %_E1, %_E2, %E3 d'un des colorants E1, E2, E3.

Un hypercube HC est défini dans ce premier repère REP1, tel qu'illustré à la figure 2, et cet hypercube délimite l'ensemble des teintes réalisables par le dispositif de reproduction de la couleur DIS_IMP.

Les $2^N$ sommets de cet hypercube sont appelée les « Neugebeauer Primaries », et sont associés à des motifs appelés au sens de l'invention « motifs primaires » NP.

La représentation des teintes dans ce premier repère correspond au modèle dit de « Yule-Nielsen » décrit avec les « Neugebeauer Primaries » dans le document « J.A.C. Yule, W.J. Nielsen, The penetrationof light into paper and its effect on halftone reproduction », Proc. TAGA 3, 65-76 (1951) ».

Dans un mode particulier de réalisation, la détermination du spectre adapté RA1 d'un motif M1 du sous-ensemble M1, M2, M3, M4 est effectuée en fonction des spectres de ces motifs primaires.

Par exemple, une des formules dite de Yule-Nielsen est la suivante :

$$R^{\frac{1}{n}}(\lambda) = \sum_{i \in ENP} a_i * R_i^{1/n}(\lambda)$$

Avec : $R(\lambda)$ la réflectance à la longueur d'onde $\lambda$ à estimer ;

$R_i^{1/n}(\lambda)$ pour $i \in ENP$ correspondent aux spectres des motifs primaires NP ;

$a_i$ pour $i \in ENP$ correspondent aux coefficients de Demichel définis dans le document « M.E Demichel, Procédés 26 (3), 17-21 (1924) » ;

$ENP = \{1; 2; 3; ...; 2^N\}$ avec N le nombre des colorants E1, E2, E3 ; et $n \in \mathbb{R}^+$.

Les paramètres n, $a_{i_{recherché}}$, et $a_{i_{mesuré}}$, nécessaires à l'estimation du spectre R_ELEM peuvent être déterminés lors d'une étape non représentée antérieure à l'étape E90 de détermination des spectres adaptés, tel qu'évoqué précédemment.

En différenciant cette formule, il est possible d'obtenir chacun des spectres adaptés RA1, RA2, RA3, RA4 des motifs du sous-ensemble M1, M2, M3, M4 :

$$R^{\frac{1}{n}}_{adapté}(\lambda) = R^{\frac{1}{n}}_{mesuré}(\lambda) + \sum_{i \in ENP} \left[ a_{i_{recherché}} - a_{i_{mesuré}} \right] * R_i^{1/n}(\lambda)$$

Dans lequel :

$R_{adapté}(\lambda)$ correspond par exemple au spectre adapté RA1 du motif M1 à une longueur d'onde $\lambda$ ;

$R_{mesuré}(\lambda)$ correspond au spectre connu R1 du motif M1 à une longueur d'onde $\lambda$ ;

Les $a_{i_{recherché}}$ pour $i \in ENP$ correspondent aux coefficients de Demichel associés à la teinte T_ELEM de l'élément ELEM ;

Les $a_{i_{mesuré}}$ pour $i \in ENP$ correspondent aux coefficients de Demichel associés à la teinte connue du motif M1 ;

Les $R_i(\lambda)$ pour $i \in ENP$ correspondent aux spectres des motifs primaires NP ;

$ENP = \{1; 2; 3; ... ; 2^N\}$ avec N le nombre des colorants E1, E2, E3 ; et $n \in \mathbb{R}^+$.

Une variante de la formule de Yule-Nielsen est la suivante :

$$R(\lambda) = \prod_{i \in ENP} R_i^{a_i}(\lambda)$$

On obtient à partir de cette formule une nouvelle formule permettant d'estimer les spectres adaptés RA1, RA2, RA3, RA4 des motifs du sous-ensemble M1, M2, M3, M4 :

$$R_{adapté}(\lambda) = R_{mesuré}(\lambda) * \prod_{i \in ENP} R_i^{\left( a_{i_{recherché}} - a_{i_{mesuré}} \right)}(\lambda)$$

Dans un mode particulier de réalisation, l'hypercube HC du premier repère REP1 peut être subdivisé en « sous-hypercubes », tel que représenté à la figure 1.

Dans ce mode de réalisation, l'estimation des spectres adaptés RA1, RA2, RA3, RA4 des motifs du sous-ensemble M1, M2, M3, M4 utilise les spectres des sommets des différents sous-hypercubes.

Cette estimation utilise le modèle dit « Cellular Yule-Nielsen » tel qu'il est décrit dans le document « R. Balasubramanian « Optimisation of the spectral Neugebauer model for printer characterization », J. Electronic Imagine, 8, (2), 156-166 (1999) ».

D'autres approches physiques pourraient être considérées dans l'estimation des spectres adaptés RA1, RA2, RA3, RA4 des motifs du sous-ensemble M1, M2, M3, M4.

La figure 12 représente un dispositif DIS d'estimation d'un spectre R_ELEM en réflexion ou en transmission de l'élément ELEM de la première surface S1, cet élément ELEM ayant été coloré par le dispositif de reproduction de la couleur DIS_IMP à partir d'un mélange de plusieurs colorants E1, E2, E3 en proportions prédéterminées p1, p2, p3, ces proportions p1, p2, p3 définissant une teinte de reproduction de la couleur T_ELEM de l'élément ELEM.

Ce dispositif DIS comporte :

- des moyens M_OBT de sélection d'un sous-ensemble de motifs M1, M2, M3, M4 parmi un ensemble de motifs de référence M1, M2, M3, M4, M5 reproduits ou simulés comme étant reproduits par le dispositif DIS_IMP sur une deuxième surface S2 présentant une texture identique à la première surface S1, un spectre R1, R2, R3, R4, R5 en réflexion ou en transmission et une teinte de reproduction propre au dispositif de reproduction de la couleur DIS_IMP de chacun des motifs M1, M2, M3, M4, M5 de cet ensemble étant connus ;
- des moyens M_DET_RA de détermination pour déterminer, pour chaque motif du sous-ensemble, un spectre adapté au moins à partir du spectre en réflexion ou en transmission du motif ; et
- des moyens M_DET_R_ELEM d'estimation du spectre R_ELEM en réflexion ou en transmission de l'élément ELEM par moyennage pondéré des spectres adaptés RA1, RA2, RA3, RA4 des motifs du sous-ensemble M1, M2, M3, M4.

Le système DIS comporte également un support d'enregistrement SUP dans lequel est stocké un programme PG comportant des instructions permettant de mettre en œuvre le procédé d'estimation du spectre R_ELEM en réflexion ou en transmission de l'élément ELEM de la première surface S1.

Dans le mode de réalisation décrit ici, le système DIS possède l'architecture matérielle d'un ordinateur, telle que représentée schématiquement à la figure 13.

Le système DIS comporte ainsi un processeur 10, une mémoire non volatile réinscriptible 11, une mémoire morte de type ROM (pour « Read-only memory », en anglais) 12, une mémoire vive de type RAM (pour « Random-access memory », en anglais) 13 et un module COM de communication.

La mémoire morte 12 du système DIS constitue un support d'enregistrement conforme à l'invention, lisible par le processeur 10 et sur lequel est enregistré un programme d'ordinateur conforme à l'invention comportant des instructions pour l'exécution des étapes d'un procédé de d'estimation du spectre R_ELEM en réflexion ou en transmission de l'élément ELEM de la première surface S1, dont les étapes ont été détaillées en référence aux figures 5 à 8.

**Revendications**

1. Procédé d'estimation d'un spectre (R_ELEM) en réflexion ou en transmission d'un élément (ELEM) d'une première surface (S1), ledit élément (ELEM) ayant été coloré par un dispositif de reproduction de la couleur (DIS_IMP) à partir d'un mélange de plusieurs colorants (E1, E2, E3) en proportions prédéterminées (p1, p2, p3), lesdites proportions (p1, p2, p3) définissant une teinte de reproduction de la couleur (T_ELEM) dudit élément (ELEM), ledit procédé étant mis en œuvre par un dispositif (DIS) et comportant :

   - une étape (E60) de sélection d'un sous-ensemble de motifs (M1, M2, M3, M4) parmi un ensemble de motifs de référence (M1, M2, M3, M4, M5) reproduits ou simulés comme étant reproduits par ledit dispositif (DIS_IMP) sur une deuxième surface (S2) présentant une texture identique à ladite première surface (S1), un spectre (R1, R2, R3, R4, R5) en réflexion ou en transmission et une teinte de reproduction de la couleur propre audit dispositif (DIS_IMP) de chacun desdits motifs (M1, M2, M3, M4, M5) dudit ensemble étant connus ;
   - pour chaque motif (M1, M2 ou M3) dudit sous-ensemble, une étape (E90) de détermination d'un spectre adapté (RA1, RA2 ou RA3) au moins à partir du spectre en réflexion ou en transmission dudit motif, ledit spectre adapté (RA1) d'un dit motif (M1) dudit sous-ensemble (M1, M2, M3, M4) étant déterminé par une méthode cherchant à minimiser la différence des réflectances ou des transmittances entre le spectre (R1) en réflexion ou en transmission dudit motif (M1) et le spectre (R_ELEM) en réflexion ou en transmission dudit élément (ELEM); et
   - une étape (E130) d'estimation dudit spectre (R_ELEM) en réflexion ou en transmission dudit élément (ELEM) par moyennage pondéré desdits spectres adaptés (RA1, RA2, RA3, RA4) desdits motifs dudit sous-ensemble (M1, M2, M3, M4).

2. Procédé selon la revendication 1, dans lequel :

   - un premier repère (REP1) en N dimensions est considéré, avec N le nombre desdits plusieurs colorants (E1, E2, E3), des points dudit premier repère (REP1) permettant de décrire des teintes de reproduction de la couleur, chaque dimension dudit premier repère (REP1) correspondant à une proportion (%_E1, %_E2, %E3) d'une desdits plusieurs colorants (E1, E2, E3) ;
   - ledit ensemble de motifs de référence (M1, M2, M3, M4, M5) comporte $2^N$ motifs dits « primaires », les points (NP) décrivant les teintes desdits motifs primaires dans ledit premier repère (REP1) étant localisés aux sommets d'un hypercube (HC), ledit hypercube délimitant un ensemble des teintes réalisables par ledit dispositif de reproduction de la couleur (DIS_IMP) ; et
   - ladite détermination dudit spectre adapté (RA1) d'un dit motif (M1) dudit sous-ensemble (M1, M2, M3, M4) est effectuée en fonction des spectres desdits motifs primaires (NP).

3. Procédé selon la revendication 2, dans lequel ledit spectre adapté (RA1) d'un dit motif (M1) dudit sous-ensemble (M1, M2, M3, M4) est déterminé par la formule suivante :

$$R^{\frac{1}{n}}_{adapté}(\lambda) = R^{\frac{1}{n}}_{mesuré}(\lambda) + \sum_{i \in ENP} \left[ a_{i_{recherché}} - a_{i_{mesuré}} \right] * R^{1/n}_i(\lambda)$$

Dans lequel :

$R_{adapté}(\lambda)$ correspond au dit spectre adapté (RA1) dudit motif (M1) à une longueur d'onde $\lambda$ ;

$R_{mesuré}(\lambda)$ correspond au dit spectre connu (R1) dudit motif (M1) à une longueur d'onde $\lambda$ ;

Les $a_{i_{recherché}}$ pour $i \in ENP$ correspondent à des coefficients dit « de Demichel » associés à la teinte (T_ELEM) dudit élément (ELEM) ;

Les $a_{i_{mesuré}}$ pour $i \in ENP$ correspondent aux coefficients de Demichel associés à la teinte connue dudit motif (M1) ;

Les $R_i(\lambda)$ pour $i \in ENP$ correspondent aux spectres desdits motifs primaires (NP) ;

$ENP = \{1; 2; 3; ... ; 2^N\}$ avec N le nombre desdits plusieurs colorants (E1, E2, E3) ; et $n \in \mathbb{R}^+$ .

4. Procédé selon la revendication 2, dans lequel ledit spectre adapté (RA1) d'un dit motif (M1) dudit sous-ensemble (M1, M2, M3, M4) est déterminé par la formule suivante :

$$R_{adapté}(\lambda) = R_{mesuré}(\lambda) * \prod_{i \in ENP} R_i^{\left(a_{i_{recherché}} - a_{i_{mesuré}}\right)}(\lambda)$$

Dans lequel :

$R_{adapté}(\lambda)$ correspond au dit spectre adapté (RA1) dudit motif (M1) à une longueur d'onde $\lambda$ ;

$R_{mesuré}(\lambda)$ correspond au dit spectre connu (R1) dudit motif (M1) à une longueur d'onde $\lambda$ ;

Les $a_{i_{recherché}}$ pour $i \in ENP$ correspondent à des coefficients dit « de Demichel » associés à la teinte (T_ELEM) dudit élément (ELEM) ;

Les $a_{i_{mesuré}}$ pour $i \in ENP$ correspondent aux coefficients de Demichel associés à la teinte connue dudit motif (M1) ;

Les $R_i(\lambda)$ pour $i \in ENP$ correspondent aux spectres desdits motifs primaires (NP) ;

$ENP = \{1; 2; 3; ...; 2^N\}$ avec N le nombre desdits plusieurs colorants (E1, E2, E3) ; et $n \in \mathbb{R}^+$ .

5. Procédé selon l'une quelconque des revendications 1 à 4, dans lequel ladite étape (E60) de sélection dudit sous-ensemble de motifs (M1, M2, M3, M4) comporte :

- une étape (F200) de représentation, dans un deuxième repère (REP2) à N dimensions, avec N le nombre desdits plusieurs colorants (E1, E2, E3), de points (P1, P2, P3, P4, P5) décrivant lesdites teintes desdits motifs de référence dudit ensemble (M1, M2, M3, M4, M5), chaque dimension dudit deuxième repère (REP2) correspondant à une proportion (%_E1, %_E2, %E3) d'un desdits colorants (E1, E2, E3) ; et
- une étape (F400) de sélection des motifs dudit sous-ensemble (M1, M2, M3) parmi lesdits motifs de référence dudit ensemble (M1, M2, M3, M4, M5), les points (P1, P2, P3, P4) décrivant lesdites teintes desdits motifs sélectionnés (M1, M2, M3, M4) correspondant aux plus proches voisins d'un point (P_ELEM) décrivant la teinte dudit élément (ELEM) dans ledit deuxième repère (REP2).

6. Procédé selon l'une quelconque des revendications 1 à 4, dans lequel ladite étape (E60) de sélection dudit sous-ensemble de motifs (M1, M2, M3, M4) comporte :

- une étape (H200) de maillage d'un troisième repère (REP3) à N dimensions, avec N le nombre desdits plusieurs colorants (E1, E2, E3), le maillage étant constitué par des points (P1, P2, P3, P4, P5) décrivant lesdites teintes desdits motifs de référence dudit ensemble (M1, M2, M3, M4, M5), chaque dimension dudit troisième repère (REP3) correspondant à une proportion (%_E1, %_E2, %E3) d'un desdits colorants (E1, E2, E3) ; et
- une étape (H400) de sélection des motifs (M1, M2, M3, M4) dudit sous-ensemble parmi lesdits motifs de référence (M1, M2, M3, M4, M5), les points décrivant lesdites teintes desdits motifs sélectionnés (M1, M2, M3, M4) correspondant aux sommets d'un simplexe dudit maillage, ledit simplexe contenant ledit point (P_ELEM) décrivant la teinte (T_ELEM) dudit élément (ELEM) dans ledit troisième repère (REP3).

7. Procédé selon l'une quelconque des revendications 1 à 5, dans lequel lors de ladite étape (E60) de sélection dudit sous-ensemble de motifs, l'intégralité des motifs dudit ensemble (M1, M2, M3, M4, M5) sont sélectionnés.

8. Procédé selon l'une quelconque des revendications 1 à 7, comportant une étape préalable (E20) de mesure d'au moins un spectre (R1, R2, R4', R5', R6, R7) en réflexion ou en transmission d'au moins un motif compris dans un assortiment de motifs (M1, M2, M4, M5, M6, M7) de teintes connues reproduits sur ladite deuxième surface (S2), une partie dudit assortiment (M1, M2, M4, M5) étant compris dans ledit ensemble de motifs de référence (M1, M2, M3, M4, M5).

9. Procédé selon la revendication 8, comportant une étape préalable (E30) de filtrage dudit assortiment de motifs (M1, M2, M4, M5, M6, M7), ledit filtrage permettant :

   - d'obtenir au moins un motif (M1, M2, M4, M5), ledit au moins un motif (M1, M2, M4, M5) étant compris dans ledit ensemble de motifs de référence (M1, M2, M3, M4, M5) ; et
   - de déterminer lesdits spectres (R1, R2, R4, R5) desdits motifs obtenus (M1, M2, M4, M5) à partir desdits spectres mesurés (R1, R2, R4', R5', R6, R7) desdits motifs dudit assortiment (M1, M2, M4, M5, M6, M7).

10. Procédé selon l'une quelconque des revendications 1 à 9, comportant une étape préalable (E40) d'estimation d'au moins un spectre (R3) en réflexion ou en transmission d'au moins un motif (M3) simulé comme étant reproduit sur ladite deuxième surface (S2) avec une teinte connue, ledit au moins un motif simulé (M3) faisant parti dudit sous-ensemble (M1, M2, M3, M4) et son spectre estimé (R3) étant nécessaire à ladite détermination dudit spectre (R_ELEM) dudit élément (ELEM).

11. Dispositif (DIS) d'estimation d'un spectre (R_ELEM) en réflexion ou en transmission d'un élément (ELEM) d'une première surface (S1), ledit élément (ELEM) ayant été coloré par un dispositif de reproduction de la couleur (DIS_IMP) à partir d'un mélange de plusieurs colorants (E1, E2, E3) en proportions prédéterminées (p1, p2, p3), lesdites proportions (p1, p2, p3) définissant une teinte de reproduction de la couleur (T_ELEM) dudit élément (ELEM), ledit dispositif (DIS) comportant :

   - des moyens (M_OBT) de sélection d'un sous-ensemble de motifs (M1, M2, M3, M4) parmi un ensemble de motifs de référence (M1, M2, M3, M4, M5) reproduits ou simulés comme étant reproduits par ledit dispositif (DIS_IMP) sur une deuxième surface (S2) présentant une texture identique à ladite première surface (S1), un spectre (R1, R2, R3, R4, R5) en réflexion ou en transmission et une teinte de reproduction de la couleur propre audit dispositif de reproduction de la couleur (DIS_IMP) de chacun desdits motifs (M1, M2, M3, M4, M5) dudit ensemble étant connus ;
   - des moyens (M_DET_RA) de détermination pour déterminer, pour chaque motif dudit sous-ensemble, un spectre adapté au moins à partir du spectre en réflexion ou en transmission dudit motif, ledit spectre adapté (RA1) d'un dit motif (M1) dudit sous-ensemble (M1, M2, M3, M4) étant déterminé par une méthode cherchant à minimiser la différence des réflectances ou des transmittances entre le spectre (R1) en réflexion ou en transmission dudit motif (M1) et le spectre (R_ELEM) en réflexion ou en transmission dudit élément (ELEM) ; et
   - des moyens (M_DET_R_ELEM) d'estimation dudit spectre (R_ELEM) en réflexion ou en transmission dudit élément (ELEM) par moyennage pondéré desdits spectres adaptés (RA1, RA2, RA3, RA4) desdits motifs dudit sous-ensemble (M1, M2, M3, M4).

12. Programme d'ordinateur (PG) comportant des instructions pour l'exécution des étapes d'un procédé d'estimation d'un spectre en réflexion ou en transmission d'un élément d'une première surface selon l'une quelconque des revendications 1 à 10 lorsque ces instructions sont exécutées par un ordinateur.

13. Support d'enregistrement (SUP) lisible par un ordinateur sur lequel est enregistré un programme d'ordinateur comprenant les instructions pour l'exécution desdites étapes d'un procédé d'estimation d'un spectre en réflexion ou en transmission d'un élément d'une première surface selon l'une quelconque des revendications 1 à 10.

**Patentansprüche**

1. Verfahren zur Schätzung eines Reflexions- oder Übertragungsspektrums (R_ELEM) eines Elements (ELEM) einer ersten Oberfläche (S1), wobei das Element (ELEM) durch eine Vorrichtung zur Wiedergabe der Farbe (DIS_IMP) aus einer Mischung von mehreren Farbstoffen (E1, E2, E3) in vorbestimmten Anteilen (p1, p2, p3) gefärbt worden ist, wobei die Anteile (p1, p2, p3) einen Wiedergabefarbton der Farbe (T_ELEM) des Elements (ELEM) definieren, wobei das Verfahren durch eine Vorrichtung (DIS) umgesetzt wird und beinhaltet:

   - einen Schritt (E60) der Auswahl einer Untergruppe von Motiven (M1, M2, M3, M4) aus einer Gruppe von Referenzmotiven (M1, M2, M3, M4, M5), die wiedergegeben oder simuliert werden, wie sie durch die Vorrichtung (DIS_IMP) auf einer zweiten Oberfläche (S2) wiedergegeben werden, die eine identische Textur zu der ersten Oberfläche (S1) aufweist, wobei ein Reflexions- oder Übertragungsspektrum (R1, R2, R3, R4, R5) und ein Wiedergabefarbton der eigenen Farbe der Vorrichtung (DIS_IMP) von jedem der Motive (M1, M2, M3, M4, M5) der Gruppe bekannt sind,
- für jedes Motiv (M1, M2 oder M3) der Untergruppe einen Schritt (E90) der Bestimmung eines angepassten Spektrums (RA1, RA2 oder RA3) mindestens aus dem Reflexions- oder Übertragungsspektrum des Motivs, wobei das angepasste Spektrum (RA1) eines Motivs (M1) der Untergruppe (M1, M2, M3, M4) durch einen Vorgang bestimmt wird, der anstrebt, den Unterschied der Reflexionen oder Übertragungen zwischen dem Reflexions- oder Übertragungsspektrum (R1) des Motivs (M1) und dem Reflexions- oder Übertragungsspektrum (R_ELEM) des Elements (ELEM) zu minimieren, und
- einen Schritt (E130) der Schätzung des Reflexions- oder Übertragungsspektrums (R_ELEM) des Elements (ELEM) durch gewichtete Mittelung der angepassten Spektren (RA1, RA2, RA3, RA4) der Motive der Untergruppe (M1, M2, M3, M4).

2. Verfahren nach Anspruch 1, wobei:

- eine erste Markierung (REP1) aus N Abmessungen in Betracht gezogen wird, wobei N die Anzahl der mehreren Farbstoffe (E1, E2, E3) ist, wobei Punkte der ersten Markierung (REP1) ermöglichen, Wiedergabefarbtöne der Farbe zu beschreiben, wobei jede Abmessung der ersten Markierung (REP1) einem Anteil (%_E1, %_E2, %_E3) von einem der mehreren Farbstoffe (E1, E2, E3) entspricht,
- die Gruppe von Referenzmotiven (M1, M2, M3, M4, M5) $2^N$ Motive beinhaltet, die als "Primärmotive" bezeichnet werden, wobei die Punkte (NP), welche die Farbtöne der Primärmotive in der ersten Markierung (REP1) beschreiben, an den Spitzen eines Hyperwürfels (HC) lokalisiert sind, wobei der Hyperwürfel eine Gruppe von umsetzbaren Farbtönen durch die Vorrichtung zur Wiedergabe der Farbe (DIS_IMP) begrenzt, und
- die Bestimmung des angepassten Spektrums (RA1) eines Motivs (M1) der Untergruppe (M1, M2, M3, M4) in Abhängigkeit der Spektren der Primärmotive (NP) umgesetzt wird.

3. Verfahren nach Anspruch 2, wobei das angepasste Spektrum (RA1) eines Motivs (M1) der Untergruppe (M1, M2, M3, M4) durch die folgende Formel bestimmt wird:

$$R_{adapté}^{\frac{1}{n}}(\lambda) = R_{mesuré}^{\frac{1}{n}}(\lambda) + \sum_{i \in ENP} \left[ a_{i_{recherché}} - a_{i_{mesuré}} \right] * R_i^{1/n}(\lambda)$$

wobei:

$R_{adapté}(\lambda)$ dem angepassten Spektrum (RA1) des Motivs (M1) bei einer Wellenlänge $\lambda$ entspricht,
$R_{mesuré}(\lambda)$ dem bekannten Spektrum (R1) des Motivs (M1) bei einer Wellenlänge $\lambda$ entspricht,
$a_{i_{recherché}}$ für $i \in ENP$ Koeffizienten entspricht, die als "von Demichel" bezeichnet werden, die dem Farbton (T_ELEM) des Elements (ELEM) zugeordnet sind,
$a_{i_{mesuré}}$ für $i \in ENP$ den Koeffizienten von Demichel entspricht, die dem bekannten Farbton des Motivs (M1) zugeordnet sind,
$R_i(\lambda)$ für $i \in ENP$ den Spektren der Primärmotive (NP) entspricht,

$ENP = \{1; 2; 3; ...; 2^N\}$, wobei N die Anzahl der mehreren Farbstoffe (E1, E2, E3) ist, und $n \in \mathbb{R}^+$.

4. Verfahren nach Anspruch 2, wobei das angepasste Spektrum (RA1) eines Motivs (M1) der Untergruppe (M1, M2, M3, M4) durch die folgende Formel bestimmt wird:

$$R_{adapté}(\lambda) = R_{mesuré}(\lambda) * \prod_{i \in ENP} R_i^{\left( a_{i_{recherché}} - a_{i_{mesuré}} \right)}(\lambda)$$

wobei:

$R_{adapté}(\lambda)$ dem angepassten Spektrum (RA1) des Motivs (M1) bei einer Wellenlänge $\lambda$ entspricht,
$R_{mesuré}(\lambda)$ dem bekannten Spektrum (R1) des Motivs (M1) bei einer Wellenlänge $\lambda$ entspricht,

$a_{irecherché}$ für $i \in ENP$ Koeffizienten entspricht, die als "von Demichel" bezeichnet werden, die dem Farbton (T_ELEM) des Elements (ELEM) zugeordnet sind,

$a_{imesuré}$ für $i \in ENP$ den Koeffizienten von Demichel entspricht, die dem bekannten Farbton des Motivs (M1) zugeordnet sind,

$R_i(\lambda)$ für $i \in ENP$ den Spektren der Primärmotive (NP) entspricht,

$ENP = \{1; 2; 3; ...; 2^N\}$, wobei N die Anzahl der mehreren Farbstoffe (E1, E2, E3) ist, und $n \in \mathbb{R}^+$.

5. Verfahren nach einem der Ansprüche 1 bis 4, wobei der Schritt (E60) der Auswahl der Untergruppe von Motiven (M1, M2, M3, M4) beinhaltet:

   - einen Schritt (F200) der Darstellung, in einer zweiten Markierung (REP2) mit N Abmessungen, wobei N die Anzahl der mehreren Farbstoffe (E1, E2, E3) ist, von Punkten (P1, P2, P3, P4, P5), welche die Farbtöne der Referenzmotive der Gruppe (M1, M2, M3, M4, M5) beschreiben, wobei jede Abmessung der zweiten Markierung (REP2) einem Anteil (%_E1, %_E2, %_E3) von einem der Farbstoffe (E1, E2, E3) entspricht, und
   - einen Schritt (F400) der Auswahl von Motiven der Untergruppe (M1, M2, M3) aus den Referenzmotiven der Gruppe (M1, M2, M3, M4, M5), wobei die Punkte (P1, P2, P3, P4) die Farbtöne der ausgewählten Motive (M1, M2, M3, M4) beschreiben, die den nächsten Nachbarn eines Punktes (P_ELEM) entsprechen, der den Farbton des Elements (ELEM) in der zweiten Markierung (REP2) beschreibt.

6. Verfahren nach einem der Ansprüche 1 bis 4, wobei der Schritt (E60) der Auswahl der Untergruppe von Motiven (M1, M2, M3, M4) beinhaltet:

   - einen Schritt (H200) der Vernetzung einer dritten Markierung (REP3) mit N Abmessungen, wobei N die Anzahl der mehreren Farbstoffe (E1, E2, E3) ist, wobei die Vernetzung durch Punkte (P1, P2, P3, P4, P5) gebildet wird, welche die Farbtöne der Referenzmotive der Gruppe (M1, M2, M3, M4, M5) beschreiben, wobei jede Abmessung der dritten Markierung (REP3) einem Anteil (%_E1, %_E2, %_E3) von einem der Farbstoffe (E1, E2, E3) entspricht, und
   - einen Schritt (H400) der Auswahl von Motiven (M1, M2, M3, M4) der Untergruppe aus den Referenzmotiven (M1, M2, M3, M4, M5), wobei die Punkte die Farbtöne der ausgewählten Motive (M1, M2, M3, M4) beschreiben, die den Spitzen eines Simplex der Vernetzung entsprechen, wobei der Simplex den Punkt (P_ELEM) enthält, der den Farbton (T_ELEM) des Elements (ELEM) in der dritten Markierung (REP3) beschreibt.

7. Verfahren nach einem der Ansprüche 1 bis 5, wobei in dem Schritt (E60) der Auswahl der Untergruppe von Motiven die Gesamtheit der Motive der Gruppe (M1, M2, M3, M4, M5) ausgewählt wird.

8. Verfahren nach einem der Ansprüche 1 bis 7, das einen vorhergehenden Schritt (E20) der Messung von mindestens einem Reflexions- oder Übertragungsspektrum (R1, R2, R4', R5', R6, R7) von mindestens einem Motiv beinhaltet, das in einer Auswahl an Motiven (M1, M2, M4, M5, M6, M7) mit bekannten Farbtönen enthalten ist, die auf der zweiten Oberfläche (S2) wiedergegeben werden, wobei ein Teil der Auswahl (M1, M2, M4, M5) in der Gruppe von Referenzmotiven (M1, M2, M3, M4, M5) enthalten ist.

9. Verfahren nach Anspruch 8, das einen vorhergehenden Schritt (E30) der Filterung der Auswahl an Motiven (M1, M2, M4, M5, M6, M7) beinhaltet, wobei die Filterung ermöglicht:

   - Erhalten von mindestens einem Motiv (M1, M2, M4, M5), wobei das mindestens eine Motiv (M1, M2, M4, M5) in der Gruppe von Referenzmotiven (M1, M2, M3, M4, M5) enthalten ist, und
   - Bestimmen der Spektren (R1, R2, R4, R5) der erhaltenen Motive (M1, M2, M4, M5) aus den gemessenen Spektren (R1, R2, R4', R5', R6, R7) der Motive der Auswahl (M1, M2, M4, M5, M6, M7).

10. Verfahren nach einem der Ansprüche 1 bis 9, das einen vorhergehenden Schritt (E40) der Schätzung von mindestens einem Reflexions- oder Übertragungsspektrum (R3) von mindestens einem Motiv (M3), das simuliert wird, wie es auf der zweiten Oberfläche (S2) mit einem bekannten Farbton wiedergegeben wird, beinhaltet, wobei das mindestens eine simulierte Motiv (M3) einen Teil der Untergruppe (M1, M2, M3, M4) bildet und sein geschätztes Spektrum (R3) für die Bestimmung des Spektrums (R_ELEM) des Elements (ELEM) erforderlich ist.

11. Vorrichtung (DIS) zur Schätzung eines Reflexions- oder Übertragungsspektrums (R_ELEM) eines Elements (ELEM) einer ersten Oberfläche (S1), wobei das Element (ELEM) durch eine Vorrichtung zur Wiedergabe der Farbe (DIS_IMP) aus einer Mischung von mehreren Farbstoffen (E1, E2, E3) in vorbestimmten Anteilen (p1, p2, p3) gefärbt worden ist, wobei die Anteile (p1, p2, p3) einen Wiedergabefarbton der Farbe (T_ELEM) des Elements (ELEM) definieren, wobei die Vorrichtung (DIS) beinhaltet:

- Mittel (M_OBT) zur Auswahl einer Untergruppe von Motiven (M1, M2, M3, M4) aus einer Gruppe von Referenzmotiven (M1, M2, M3, M4, M5), die wiedergegeben oder simuliert werden, wie sie durch die Vorrichtung (DIS_IMP) auf einer zweiten Oberfläche (S2) wiedergegeben werden, die eine identische Textur zu der ersten Oberfläche (S1) aufweist, wobei ein Reflexions- oder Übertragungsspektrum (R1, R2, R3, R4, R5) und ein Wiedergabefarbton der eigenen Farbe der Vorrichtung zur Wiedergabe der Farbe (DIS_IMP) von jedem der Motive (M1, M2, M3, M4, M5) der Gruppe bekannt sind,
- Bestimmungsmittel (M_DET_RA) zum Bestimmen, für jedes Motiv der Untergruppe, eines angepassten Spektrums mindestens aus dem Reflexions- oder Übertragungsspektrum des Motivs, wobei das angepasste Spektrum (RA1) eines Motivs (M1) der Untergruppe (M1, M2, M3, M4) durch einen Vorgang bestimmt wird, der anstrebt, den Unterschied der Reflexionen oder Übertragungen zwischen dem Reflexions- oder Übertragungsspektrum (R1) des Motivs (M1) und dem Reflexions- oder Übertragungsspektrum (R_ELEM) des Elements (ELEM) zu minimieren, und
- Mittel (M_DET_R_ELEM) zur Schätzung des Reflexions- oder Übertragungsspektrums (R_ELEM) des Elements (ELEM) durch gewichtete Mittelung der angepassten Spektren (RA1, RA2, RA3, RA4) der Motive der Untergruppe (M1, M2, M3, M4).

**12.** Computerprogramm (PG), das Anweisungen zur Ausführung der Schritte eines Verfahrens zur Schätzung eines Reflexions- oder Übertragungsspektrums eines Elements einer ersten Oberfläche nach einem der Ansprüche 1 bis 10 beinhaltet, wenn diese Anweisungen durch einen Computer ausgeführt werden.

**13.** Speichermedium (SUP), das durch einen Computer lesbar ist, auf dem ein Computerprogramm gespeichert ist, das die Anweisungen zur Ausführung der Schritte eines Verfahrens zur Schätzung eines Reflexions- oder Übertragungsspektrums eines Elements einer ersten Oberfläche nach einem der Ansprüche 1 bis 10 umfasst.

**Claims**

**1.** A method of estimating a reflection or transmission spectrum (R_ELEM) of an element (ELEM) of a first surface (S1), said element (ELEM) having been colored by a color reproduction device (DIS_IMP) from a mixture of a plurality of dyes (E1, E2, E3) in predetermined proportions (p1, p2, p3), said proportions (p1, p2, p3) defining a color reproduction hue (T_ELEM) of said element (ELEM), said method being implemented by a device (DIS) and comprising :

- - a step (E60) of selecting a subset of patterns (M1, M2, M3, M4) from a set of reference patterns (M1, M2, M3, M4, M5) reproduced or simulated as being reproduced by said device (DIS_IMP) on a second surface (S2) having an identical texture to said first surface (S1), a reflection or transmission spectrum (R1, R2, R3, R4, R5) and a color reproduction hue specific to said device (DIS_IMP) of each of said patterns (M1, M2, M3, M4, M5) of said set being known;
- - for each pattern (M1, M2 or M3) of said subset, a step (E90) of determining an adapted spectrum (RA1, RA2 or RA3) at least from the reflection or transmission spectrum of said pattern, said adapted spectrum (RA1) of a said pattern (M1) of said subset (M1, M2, M3, M4) being determined by a method seeking to minimize the difference in reflectances or transmittances between the reflection or transmission spectrum (R1) of said pattern (M1) and the reflection or transmission spectrum (R_ELEM) of said element (ELEM) ; and
- - a step (E130) of estimating said reflection or transmission spectrum (R_ELEM) of said element (ELEM) by weighted averaging of said adapted spectra (RA1, RA2, RA3, RA4) of said patterns of said sub-assembly (M1, M2, M3, M4).

**2.** The method of claim 1, wherein:

- a first coordinate system (REP1) in N dimensions is considered, with N the number of said several dyes (E1, E2, E3), points of said first coordinate system (REP1) allowing to describe color reproduction hues, each dimension of said first coordinate system (REP1) corresponding to a proportion (%_E1, %_E2, %E3) of one of said several dyes (E1, E2, E3);
- - said set of reference patterns (M1, M2, M3, M4, M5) comprises $2^N$ so-called "primary" patterns, the points (NP) describing the hues of said primary patterns in said first coordinate system (REP1) being located at the vertices of a hypercube (HC), said hypercube delimiting a set of hues that can be achieved by said color reproduction device (DIS_IMP); and

-- said determination of said adapted spectrum (RA1) of a said pattern (M1) of said subset (M1, M2, M3, M4) is performed based on the spectra of said primary patterns (NP).

3. The method of claim 2, wherein said adapted spectrum (RA1) of a said pattern (M1) of said subset (M1, M2, M3, M4) is determined by the following formula:

$$R^{\frac{1}{n}}_{adapté}(\lambda) = R^{\frac{1}{n}}_{mesuré}(\lambda) + \sum_{i \in ENP} \left[ a_{i_{recherché}} - a_{i_{mesuré}} \right] * R^{1/n}_{i}(\lambda)$$

In which:

$R_{adapté}(\lambda)$ corresponds to said adapted spectrum (RA1) of said pattern (M1) at a wavelength $\lambda$ ;

$R_{mesuré}(\lambda)$ corresponds to said known spectrum (R1) of said pattern (M1) at a wavelength $\lambda$ ;

The $a_{i_{recherché}}$ for $i \in ENP$ correspond to so-called "de Demichel" coefficients associated with the hue (T_ELEM) of said element (ELEM) ;

The $a_{i_{mesuré}}$ for $i \in ENP$ correspond to the de Demichel coefficients associated with the known hue of said pattern (M1) ;

The $R_i (\lambda)$ for $i \in ENP$ correspond to the spectra of said primary patterns (NP) ;

$ENP = \{1; 2; 3; ...; 2^N\}$ with N the number of said several dyes (E1, E2, E3); and $n \in \mathbb{R}^+$ .

4. The method of claim 2, wherein said matched spectrum (RA1) of a said pattern (M1) of said subset (M1, M2, M3, M4) is determined by the following formula:

$$R_{adapté}(\lambda) = R_{mesuré}(\lambda) * \prod_{i \in ENP} R_i^{\left( a_{i_{recherché}} - a_{i_{mesuré}} \right)}(\lambda)$$

In which :

$R_{adapté}(\lambda)$ corresponds to said adapted spectrum (RA1) of said pattern (M1) at a wavelength $\lambda$ ;

$R_{mesuré}(\lambda)$ corresponds to said known spectrum (R1) of said pattern (M1) at a wavelength $\lambda$ ;

The $a_{i_{recherché}}$ for $i \in ENP$ correspond to so-called "de Demichel" coefficients associated with the hue (T_ELEM) of said element (ELEM) ;

The $a_{i_{mesuré}}$ pour $i \in ENP$ correspond to the de Demichel coefficients associated with the known hue of said pattern (M1) ;

The $R_i (\lambda)$ for $i \in ENP$ correspond to the spectra of said primary patterns (NP) ;

$ENP = \{1; 2; 3; ...; 2^N\}$ with N the number of said several dyes (E1, E2, E3); and $n \in \mathbb{R}^+$ .

5. The method according to any one of claims 1 to 4, wherein said step (E60) of selecting said subset of patterns (M1, M2, M3, M4) comprises:

-- a step (F200) of representing, in a second coordinate system (REP2) with N dimensions, with N the number of said several dyes (E1, E2, E3), points (P1, P2, P3, P4, P5) describing said hues of said reference patterns of said set (M1, M2, M3, M4, M5), each dimension of said second coordinate system (REP2) corresponding to a proportion (%_E1, %_E2, %E3) of one of said dyes (E1, E2, E3); and

-- a step (F400) of selecting the patterns of said subset (M1, M2, M3) among said reference patterns of said set (M1, M2, M3, M4, M5), the points (P1, P2, P3, P4) describing said hues of said selected patterns (M1, M2, M3, M4) corresponding to the nearest neighbors of a point (P_ELEM) describing the hue of said element (ELEM) in said second coordinate system (REP2).

6. The method according to any one of claims 1 to 4, wherein said step (E60) of selecting said subset of patterns (M1, M2, M3, M4) comprises:

- - a step (H200) of meshing a third N-dimensional coordinate system (REP3), with N the number of said several dyes (E1, E2, E3), the mesh consisting of points (P1, P2, P3, P4, P5) describing said hues of said reference patterns of said set (M1, M2, M3, M4, M5), each dimension of said third coordinate system (REP3) corresponding to a proportion (%_E1, %_E2, %E3) of one of said dyes (E1, E2, E3) ; and
- - a step (H400) of selecting the patterns (M1, M2, M3, M4) of said subset among said reference patterns (M1, M2, M3, M4, M5), the points describing said hues of said selected patterns (M1, M2, M3, M4) corresponding to the vertices of a simplex of said mesh, said simplex containing said point (P_ELEM) describing the hue (T_ELEM) of said element (ELEM) in said third coordinate system (REP3).

7. The method according to any one of claims 1 to 5, wherein in said step (E60) of selecting said subset of patterns, all of the patterns in said set (M1, M2, M3, M4, M5) are selected.

8. The method according to any one of claims 1 to 7, comprising a preliminary step (E20) of measuring at least one reflection or transmission spectrum (R1, R2, R4', R5', R6, R7) of at least one pattern included in a set of patterns (M1, M2, M4, M5, M6, M7) of known hues reproduced on said second surface (S2), part of said set (M1, M2, M4, M5) being included in said set of reference patterns (M1, M2, M3, M4, M5).

9. The method according to claim 8, comprising a prior step (E30) of filtering said set of patterns (M1, M2, M4, M5, M6, M7), said filtering allowing:

- obtaining at least one pattern (M1, M2, M4, M5), said at least one pattern (M1, M2, M4, M5) being included in said reference pattern set (M1, M2, M3, M4, M5); and
- determining said spectra (R1, R2, R4, R5) of said obtained patterns (M1, M2, M4, M5) from said measured spectra (R1, R2, R4', R5', R6, R7) of said patterns of said set (M1, M2, M4, M5, M6, M7).

10. The method according to any one of claims 1 to 9, comprising a prior step (E40) of estimating at least one reflection or transmission spectrum (R3) of at least one pattern (M3) simulated as being reproduced on said second surface (S2) with a known hue, said at least one simulated pattern (M3) being part of said subset (M1, M2, M3, M4) and its estimated spectrum (R3) being necessary for said determination of said spectrum (R_ELEM) of said element (ELEM).

11. A device (DIS) for estimating a reflection or transmission spectrum (R_ELEM) of an element (ELEM) of a first surface (S1), said element (ELEM) having been colored by a color reproduction device (DIS_IMP) from a mixture of several dyes (E1, E2, E3) in predetermined proportions (p1, p2, p3), said proportions (p1, p2, p3) defining a color reproduction hue (T_ELEM) of said element (ELEM), said device (DIS) comprising :

- means (M_OBT) for selecting a subset of patterns (M1, M2, M3, M4) from a set of reference patterns (M1, M2, M3, M4, M5) reproduced or simulated as being reproduced by said device (DIS_IMP) on a second surface (S2) having an identical texture to said first surface (S1), a reflection or transmission spectrum (R1, R2, R3, R4, R5) and a color reproduction hue specific to said color reproduction device (DIS_IMP) of each of said patterns (M1, M2, M3, M4, M5) of said set being known;
- determination means (M_DET_RA) for determining, for each pattern of said subset, an adapted spectrum at least from the reflection or transmission spectrum of said pattern, said adapted spectrum (RA1) of a said pattern (M1) of said subset (M1, M2, M3, M4) being determined by a method seeking to minimize the difference in reflectances or transmittances between the reflection or transmission spectrum (R1) of said pattern (M1) and the reflection or transmission spectrum (R_ELEM) of said element (ELEM); and
- means (M_DET_R_ELEM) for estimating said reflection or transmission spectrum (R_ELEM) of said element (ELEM) by weighted averaging of said matched spectra (RA1, RA2, RA3, RA4) of said patterns of said sub-assembly (M1, M2, M3, M4).

12. A computer program (PG) having instructions for performing the steps of a method of estimating a reflection or transmission spectrum of an element of a first surface according to any one of claims 1 to 10 when such instructions are performed by a computer.

13. A computer-readable storage medium (SUP) having recorded thereon a computer program comprising instructions for performing said steps of a method of estimating a reflection or transmission spectrum of an element of a first surface according to any one of claims 1 to 10.

## FIG.1

## FIG.2

FIG.3

FIG.4

FIG.5

FIG.6

FIG.7

FIG.8

R1    R2    R4'    R5'    R6    R7

SPECT

S2

M2
M1
M4

M7
M5
M6

# FIG.9

%E3

REP2

P4    P1

P3    • P_ELEM(p1,p2,p3)

P5    P2

%E1

%E2

# FIG.10

REP3

%E3

P4  P1

P3

P_ELEM(p1,p2,p3)

P5

P2

%E1

%E2

# FIG.11

DIS

M_OBT

SUP

M_DET_RA

PG

M_DET_R_ELEM

# FIG.12

DIS

10

11

COM

12

13

# FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9846008 A

**Littérature non-brevet citée dans la description**

- **R. BALASUBRAMANIAN.** Optimisation of the spectral Neugebauer model for printer characterization. *J. Electronic Imagine,* 1999, vol. 8 (2), 156-166
- **J.A.C. YULE ; W.J. NIELSEN.** The penetration of light into paper and its effect on halftone reproduction. *Proc. TAGA,* 1951, vol. 3, 65-76
- **H.E.J. NEIGEBAUER.** Die theoritischen Grundlagen des Mehrfarbendrucks. *Zeitschrift fuer wissenschaftliche Photographie,* 1937, vol. 36, 36-73
- **M.E DEMICHEL.** *Procédés,* 1924, vol. 26 (3), 17-21
- **F.R. CLAPPER ; J.A.C, YULE.** The Effect of Multiple Internal Reflections on the Densities of Halftone Prints on Paper. *J. Opt. Soc. Am.,* 1953, vol. 43, 600-603
- **KUBELKA, P. ; MUNK, F.** *Z tech Physik,* 1931, vol. 12, 593
- **J.A.C. YULE ; W.J. NIELSEN.** The penetrationof light into paper and its effect on halftone reproduction. *Proc. TAGA,* 1951, vol. 3, 65-76